# FASCICULE DE BREVET EUROPEEN

(11) **EP 1 166 252 B1**
(45) Date de publication et mention de la délivrance du brevet: **14.05.2003**
(21) Numéro de dépôt: 00907745.4
(22) Date de dépôt: 01.03.2000
(51) Int. Cl.: G09B 21/00, G06F 3/00, G06F 3/023

(54) **SYSTEME DE LECTURE TACTILE D'INFORMATIONS PROVENANT D'UN CALCULATEUR ET DISPOSITIF DE COMMUNICATION ASSOCIE**
TAKTILES INFORMATIONSAUSGABESYSTEM VON EINEM COMPUTER UND ENTSPRECHENDE KOMMUNIKATIONSVORRICHTUNG
TACTILE READING SYSTEM FOR DATA COMING FROM A COMPUTER AND ASSOCIATED COMMUNICATION DEVICE

(30) Priorité: 02.03.1999 FR 9902668
(43) Date de publication de la demande: 02.01.2002
(73) Titulaire: Soulie, Philippe, 12490 Viala du Tarn (FR)
(72) Inventeur: Soulie, Philippe, 12490 Viala du Tarn (FR)
(74) Mandataire: Ravina, Bernard
(86) Numéro de dépôt international: FR0000501
(87) Numéro de publication internationale: WO00052665

(56) Documents cités:
- EP-A- 0 752 639
- WO-A-97/15909
- WO-A-98/32112
- DE-A- 4 241 937
- DE-A- 4 405 655
- DE-U- 9 400 699
- GB-A- 2 311 888
- US-A- 4 905 001
- US-A- 5 515 305
- LEE S ET AL: "A STUDY ON THE TACTILE RECOGNITION OF FINGER USING ELECTRICAL STIMULUS" IEICE TRANSACTIONS ON FUNDAMENTALS OF ELECTRONICS, COMMUNICATIONS AND COMPUTER SCIENCES,JP,INSTITUTE OF ELECTRONICS INFORMATION AND COMM. ENG. TOKYO, vol. E77-A, no. 6, 1 juin 1994 (1994-06-01), pages 962-967, XP000466285 ISSN: 0916-8508

## Description

La présente invention concerne les matériels permettant d'effectuer une lecture tactile d'informations en provenance d'un calculateur électronique, et généralement destinés aux personnes non voyantes et, plus particulièrement, un système de lecture tactile selon le préambule de la revendication 1 (voir, par exemple, WO-A-9 832 112).

Actuellement, il existe les afficheurs braille comportant, selon le modèle, de vingt à quatre-vingt caractères, chacun de ces caractères étant constitué de six à huit picots activés par autant de cellules piézo-électriques commandées par le calculateur et permettant de créer un relief sur ledit caractère. Ces dispositifs de lectures sont, de par leur technologie, encombrants et onéreux. D'autre part, ces dispositifs sont destinés à la lecture seule et l'usager doit recourir à un autre matériel, de type clavier braille ou autre, pour effectuer la saisie d'informations vers le calculateur électronique. Notons que ces afficheurs doivent être posés sur un support plan lors de leur utilisation, et se prêtent mal à leur intégration dans un matériel portable de poche tels qu'agenda, messager électroniques ou autres.

On connaît aussi par les documents WO9832112 (NISSEN,DOUGHTY) et US4905001 (PENNER) des systèmes de communication tactile entre un utilisateur non voyant et un calculateur électronique, pour permettre à celui-ci de lire ou de saisir des données vers le calculateur électronique. Ces systèmes comprennent des moyens sensitifs pour procurer une sensation à un utilisateur, sous la commande du calculateur, et des moyens de saisie de données vers le calculateur.

Plus particulièrement pour le système décrit par WO 9832112, qui est considéré comme étant l'état de la technique le plus proche, les moyens sensitifs fonctionnent sur la base d'un couple d'organes tactiles affecté à chacun des doigts de l'utilisateur. Ces organes, pour chacun des doigts, vibrent à des fréquences différentes pour communiquer une information spécifique. Une combinaison entre ces différents états vibratoires met à la disposition de l'utilisateur une combinaison importante d'informations tactiles.

Plus particulièrement encore, le système décrit par US 4905001 met en oeuvre une poignée pourvue d'organes tactiles, qui sont répartis en groupe de quatre organes disposés de part et d'autre de la poignée.

La présente invention permet de résoudre ces inconvénients en proposant un matériel basé sur une technologie simple et peu onéreuse et permettant aussi bien de saisir des données vers un calculateur électronique que de lire des données en provenance de ce même calculateur.

Le système de la présente invention est du genre de ceux décrits par WO9832112 et US 4905001, pour permettre à un utilisateur non voyant de lire ou de saisir des données vers un calculateur électronique. Ce système comprend des moyens sensitifs et des moyens de saisie susvisés.

Le système de lecture tactile selon l'invention est défini dans la revendication 1.

Les moyens de saisie peuvent s'utiliser par exemple et selon le logiciel de gestion choisi, comme un clavier braille en activant simultanément l'ensemble des touches principales correspondant aux points du caractère braille à transmettre.

En mode lecture, le calculateur transmet un caractère en activant les moyens sensitifs associés aux mêmes touches qui, lorsqu'elles sont activées en mode saisie, communiquent au calculateur le même caractère.

Les moyens sensitifs communicants aux doigts de l'usager une combinaison de sensations simultanées, ce dernier peut établir la correspondance entre ladite combinaison et ledit caractère à lire puis confirmer la lecture élémentaire effective en activant une touche afin de demander au calculateur la transmission du caractère suivant. Selon un autre mode de réalisation, la transmission des caractères peut se faire de manière séquentielle selon une fréquence définie par l'utilisateur. Pour passer du mode lecture au mode écriture, l'usager peut activer une touche annexe.

Selon plusieurs variantes de l'invention, les moyens sensitifs peuvent communiquer à l'utilisateur une sensation binaire sous forme d'un relief, du blocage d'un élément mobile, d'une sensation vibratoire, d'une sensation thermique, d'une impulsion électrique légère ou tout autre type de sensation.

Selon un mode de réalisation de l'invention, chaque moyen sensitif peut être doté d'un moyen connu tel qu'un électroaimant, une cellule piézoélectrique ou une pièce en matériau dit « à mémoire de forme », déplaçant un organe capable de créer un relief. Ce relief peut apparaître sur la face du boîtier du matériel accessible par les doigts de l'usager, ou sur le bouton de la touche même lorsque, selon une variante, celle-ci intègre les moyens sensitifs.

Selon un autre mode de conception et lorsque les moyens de saisie intègrent les moyens sensitifs, la sensation participant à la transmission d'un caractère à lire consiste à bloquer ladite touche en enfoncement. Pour effectuer la lecture, l'usager appuie simultanément sur toutes lesdites touches et établit la combinaison correspondant au code transmis en détectant l'ensemble des touches non verrouillées. Lorsque l'usager a pris connaissance du caractère, il relâche les touches activées, informant ainsi le calculateur qu'il peut transmettre le caractère suivant.

Selon un mode de réalisation préférentiel, le mécanisme capable de bloquer l'enfoncement du mécanisme de touche est constitué d'un électroaimant qui, lorsqu'il est mis sous tension, attire à son contact un organe s'opposant au mouvement de la touche de saisie.

Le dispositif de communication selon l'invention peut être conçu comme un clavier braille classique intégrant les moyens sensitifs disposés conformément à l'invention. Dans ce cas, ledit dispositif doit être posé sur un support pour être utilisé.

Selon une variante, le dispositif selon l'invention peut être contenu sur un boîtier caractérisé par le fait que l'essentiel des moyens de saisie et des moyens sensitifs est situé sur la face dudit boîtier opposée à celle destinée à être en regard de l'usager. Ainsi, ce matériel de lecture et de saisie peut être utilisé sans nécessiter de support en étant tenu entre les paumes des mains de l'usager activant ou lisant de par ses pouces les touches et les moyens sensitifs éventuellement situés sur la face avant ou sur les bords dudit boîtier alors que les autres doigts de chaque main peuvent activer ou lire les touches et les moyens sensitifs situés sur la face opposée.

Le dispositif selon l'invention peut être géré par un logiciel basé sur la méthode braille et ne comporter de ce fait que six à huit moyens sensitifs. Les deux mains sont alors nécessaires pour effectuer la lecture d'un seul caractère braille. Selon une variante, d'autres moyens sensitifs sont disposés judicieusement et en nombre suffisant de telle sorte que chaque main puisse saisir ou lire un caractère braille usuel.

Selon une autre variante, le matériel selon l'invention ne comporte pas d'éléments d'affichage autres que dix moyens sensitifs disposés en deux groupes de cinq moyens sensitifs affectant respectivement les cinq doigts de la main gauche, et les cinq doigts de la main droite. Un tel dispositif, géré par un logiciel basé sur une méthode différente du braille et exploitant les trente et une combinaisons réalisables sur cinq éléments, permet cependant de lire ou de saisir de par une seule main, la plupart des caractères usuels.

Selon un autre mode de réalisation, plusieurs moyens sensitifs peuvent être répartis sur chaque doigt ou agir également sur la paume de l'utilisateur.

Quel que soit le mode de réalisation, le système de lecture tactile ou le dispositif de communication selon l'invention peut être connecté à un port standard d'un ordinateur personnel ou intégré dans son boîtier même le calculateur ainsi qu'éventuellement, un module de communication lui permettant de se connecter à un réseau tel qu'Internet et au service de messagerie électronique.

Les avantages et les caractéristiques de la présente invention ressortiront plus clairement de la description qui suit et qui se rapporte aux dessins annexés, lesquels en représentent plusieurs modes de réalisation non limitatifs.
- la figure 1 présente un mode de réalisation d'un dispositif de communication selon l'invention.
- la figure 2 présente un autre mode de réalisation d'un dispositif de communication selon l'invention.
- la figure 3a présente une vue en plan de la face avant d'un dispositif de communication selon l'invention ne nécessitant pas de support pour être utilisé
- la figure 3b présente une vue en plan de la face arrière du même dispositif de communication
- la figure 4 montre un mode de réalisation d'un moyen de saisie intégrant un moyen sensitif permettant de communiquer une information tactile binaire à un usager
- les figures 5a et 5b présentent un circuit électronique permettant de connecter un clavier selon l'invention au port parallèle d'un ordinateur personnel
- la figure 6 représente un autre mode de réalisation du dispositif de communication.

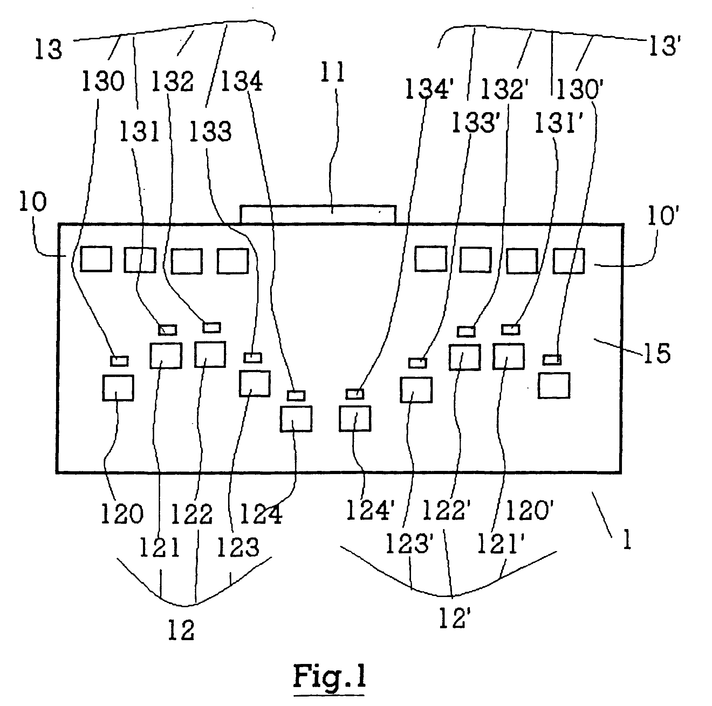

Sur la figure 1, on peut voir un boîtier 1 représentant le dispositif de communication selon l'invention dans une variante selon laquelle les moyens sensitifs sont disposés a proximité des moyens de saisie. Ce boîtier comporte deux séries 10, 10' de moyens de saisie secondaires permettant de remplir les fonctions telles que passer du mode saisie au mode lecture, déplacer un curseur ou autres. Ce boîtier 1 comporte également un connecteur 11 permettant de connecter le clavier à un ordinateur non représenté, ainsi que deux séries 12 et 12' de moyens de saisie constitués de cinq touches principales de saisie, la première série étant destinée à être activée par la main gauche alors que la série 12' est destinée à être activée par la main droite. La disposition des touches 12 ou 12' est telle que les touches 120 et 120' peuvent être activées par un auriculaire, 121 et 121' par un annulaire, 122 et 122' par un majeur, 123 et 123' par un index et 124 et 124' par un pouce. Chaque main peut ainsi appuyer sur cinq touches en même temps et donc saisir deux codes de cinq bits à la fois. Au-dessus de chacune des touches des séries 12 et 12' est disposé un moyen sensitif d'une série 13 ou 13' comportant un dispositif connu et non représenté tel qu'une cellule piézoélectrique ou à électroaimant et activant un des points 130 à 134, 130' à 134', permettant de créer un relief sur la face avant 15 du boîtier 1 et communiquant ainsi une sensation binaire à l'utilisateur. Selon un autre mode de réalisation, il est possible de communiquer à l'utilisateur une sensation binaire sous forme du blocage d'un élément mobile, d'une sensation vibratoire, thermique ou d'une impulsion électrique légère.

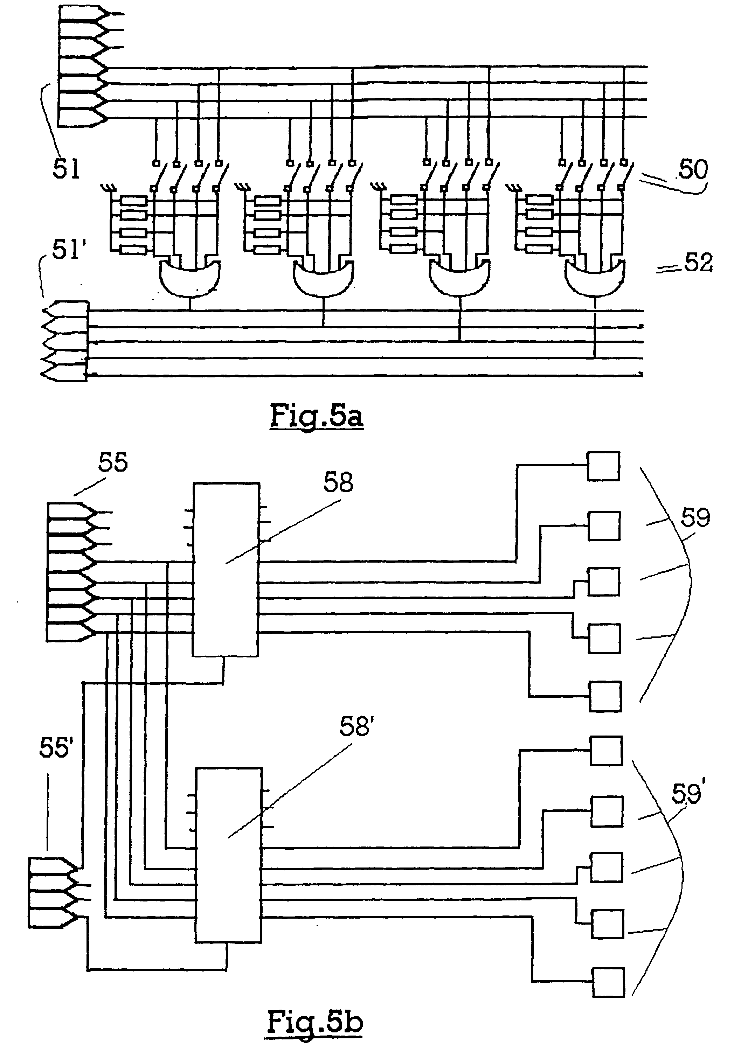

Pour effectuer la saisie, l'usager positionne ses doigts sur les touches des séries 12 et 12', et pour effectuer la lecture, l'usager positionne ses doigts sur les regards des points des séries 13 et 13'. Un tel boîtier 1 doit être posé sur un support et peut être connecté à un port standard d'un ordinateur personnel, par exemple au port parallèle de par un circuit présenté figures 5a et 5b. On obtient ainsi un matériel simple, peu encombrant et peu onéreux, et permettant à une personne mal voyante d'échanger des informations avec un système informatique.

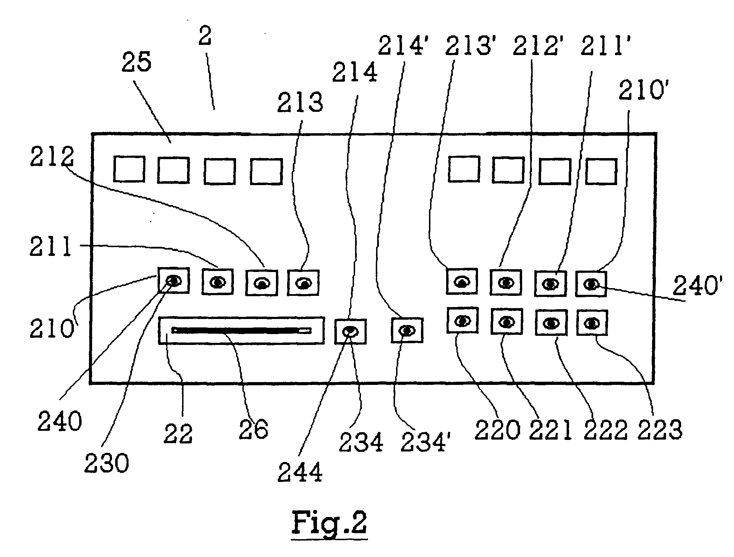

Si l'on se réfère à la figure 2, on peut voir sur la face avant 25 d'un boîtier 2 un ensemble de moyens de saisie 210 à 214 et 210' à 214' intégrant les moyens sensitifs. Selon un exemple de réalisation, chaque moyen de saisie présente un orifice tel que 230 permettant à un organe tel que 240 de s'insérer au travers du bouton des touches lorsque selon un mode de réalisation, un dispositif à cellule piézoélectrique ou autre est activé ou lorsque, selon un autre mode de réalisation, une touche non verrouillée est enfoncée, ceci afin de créer sur ledit bouton un relief détectable par l'usager. Lesdites touches et lesdits organes susceptibles de créer un relief sur le bouton de la touche, sont disposés de façon analogue aux éléments des séries 12, 12', 13 et 13' de la figure 1 de telle sorte qu'ils puissent en remplir les mêmes fonctions. On peut également voir sur la figure 2 une touche 22 accessible de par la paume de la main gauche, par des doigts libres ou par des doigts "à plat" accédant de par ailleurs et en même temps à une ou plusieurs des touches 210 à 213. Cette touche 22 insérant également un élément d'affichage créant un relief en 26, peut servir de sixième point afin de saisir ou lire de par une seule main les caractères braille usuels lorsque le matériel de lecture et de saisie est géré par une méthode adaptée basée sur le braille. Une telle touche 22 peut être également disposée sous la main droite. Selon une variante, la touche 22 est remplacée par quatre touches 220, 221, 222 et 223 remplissant les mêmes fonctions de lecture et de saisie que l'ensemble 22, 26 plus éventuellement, lorsqu'elles sont activées seules, d'autres fonctions propre au logiciel de gestion choisi. Un tel matériel permet de lire ou de saisir un grand nombre de codes distincts sans avoir à changer la position de ses doigts.

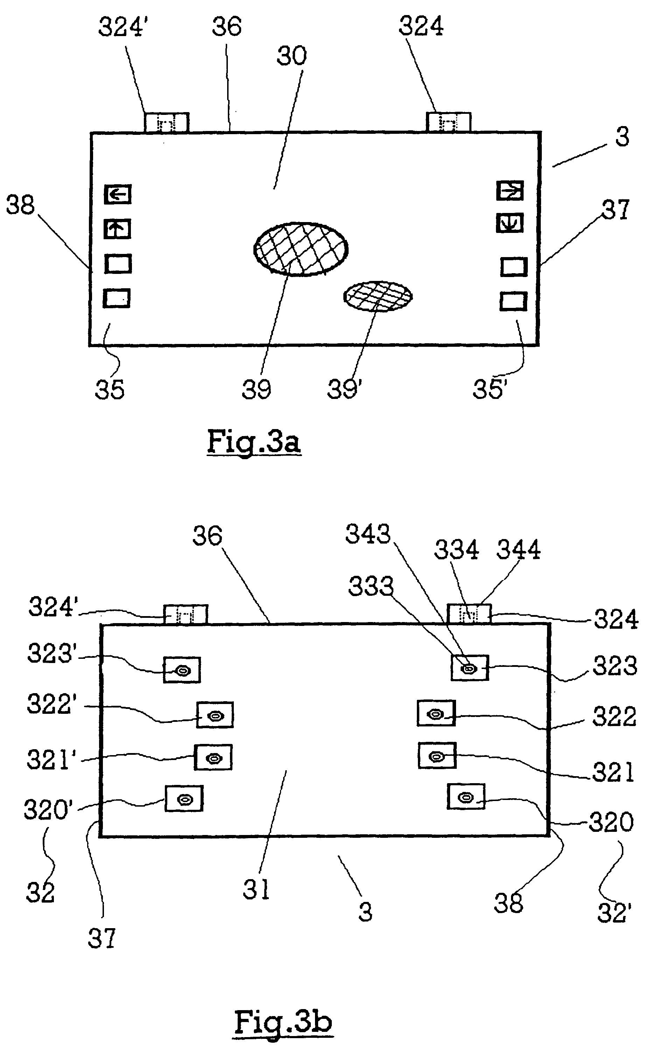

Les figures 3a et 3b présentent un boîtier 3 contenant un calculateur électronique non représenté, et disposant sur sa face avant 30 un haut parleur 39 et un micro 39' permettant d'écouter ou d'enregistrer des messages vocaux; ainsi qu'un certain nombre de touches 35, 35' de fonctions telles que des touches de mouvement d'un curseur ou de changement de mode de lecture/saisie. La face arrière 31 et le bord supérieur 36 du boîtier 3, comportent deux séries de touches principales 32, 32', la première étant destinée à être activée par les doigts de la main gauche et 32' par les doigts de la main droite. La disposition des touches 32 ou 32' est telle que les touches 320 et 320' peuvent être activées par un auriculaire, 321 et 321' par un annulaire, 322 et 322' par un majeur, 323 et 323' par un index et 324 et 324' par un pouce. Le bouton de chaque touche présente un orifice tel que 334 ou 333 permettant le passage d'un ergot tel que 344 ou 343. Selon un mode de réalisation de la touche intégrant, conformément à une caractéristique de l'invention, un moyen sensitif, ledit ergot tel que 344 ou 343 est susceptible de créer un relief sur le bouton de ladite touche sous la commande d'un organe tel qu'une cellule piézoélectrique. Selon un autre mode de réalisation, ledit ergot tel que 344 ou 343 est susceptible de créer un relief sur le bouton de ladite touche lorsque la touche est enfoncée. Dans ce dernier cas et en mode lecture, ce relief n'apparaît que sur les touches enfoncées et donc non verrouillées. Le boîtier 3 peut être tenu de par les cotés latéraux 37 et 38 entre les paumes des mains de l'usager et la saisie ou la lecture peut ainsi s'effectuer des deux mains sans nécessiter de support. Un tel dispositif est particulièrement adapté pour les personnes non voyantes désireuses d'accéder aux nombreux services d'un micro-ordinateur de poche éventuellement relié à un réseau de messagerie ou autres.

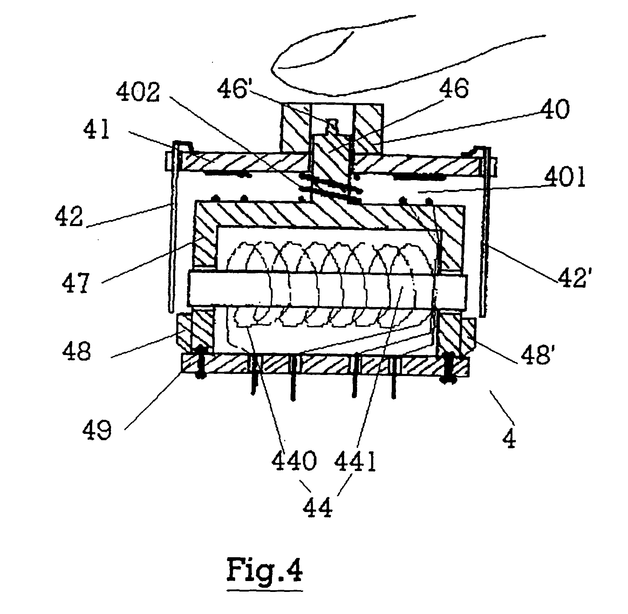

Sur la figure 4, on peut voir une touche 4 réversible à verrouillage permettant aussi bien de saisir des données que de les lire et équipant les appareils tels que ceux présentés figures 2 ou 3. Cette touche 4 comporte un bouton 40 susceptible de coulisser sur un axe 46 lorsque l'on effectue une pression sur sa face supérieure et lorsque la bobine 440 d'un électroaimant 44 n'est pas alimenté. En position enfoncée, une partie solidaire du bouton 40, ferme un contact 401 renseignant le calculateur de l'état de la touche 4. Lorsque l'on relâche la pression, un ressort 402 rappelle le bouton 40 et le contact 401 en position "repos". Si dès lors, la bobine 440 est mise sous tension, le noyau 441 attire à son contact les bras métalliques 42 et 42' articulés sur la partie 41, également métallique et fermant les lignes de champ. Les deux bras 42 et 42' sont alors en butée sur les parties 48 et 48' solidaires du corps 47 surmonté de l'axe 46, fixant l'électroaimant 44 et fixé sur un socle 49. La touche est donc bloquée en enfoncement. Un élément 46' surmontant l'axe 46, permet de créer un relief détectable par le doigt de l'usager lorsque la touche est enfoncée, afin de permettre à ce dernier de localiser facilement quelles sont les touches non verrouillées. En combinant les sensations reçues sur chaque doigt, l'usager enregistre la combinaison correspondante, de par le programme de gestion du clavier, au code transmis par le calculateur. De telles touches pourront être connectées à un calculateur électronique de par un circuit comme celui présenté figure 5. En mode lecture, le calculateur envoie un signal sur les touches 4 concernées, et attend que l'usager active puis relâche les touches non verrouillées avant d'envoyer l'information suivante.

Sur la figure 5a, on peut voir une série de contacts 50 qui peuvent être les contacts 401 activés par les touches du type de celle présentée figure 4 ou autre et appartenant au clavier 2 ou 3. Ces contacts 50 sont d'une part reliées à un connecteur 51 lui-même relié au port parallèle de données d'un calculateur non représenté, et d'autre part aux entrées des portes logiques 52, ici de type OU mais pouvant appartenir à d'autres types, ayant leurs sorties reliées à un connecteur 51' lui-même relié au port parallèle d'entrée du même calculateur. La lecture de l'état des contacts est réalisée par balayage sur le connecteur 51 et l'information est recueillie sur le connecteur 51'. Le port de donnée comprenant huit broches, on peut gérer ainsi des claviers comportant jusqu'à quarante contacts 50.

Sur la figure 5b, on peut voir un connecteur 55 relié au port parallèle de donnée d'un calculateur non représenté, et un autre connecteur 55' relié au port parallèle de commande de ce même calculateur. Les données sont acheminées sur un verrou 58 ou 58' sélectionné par l'état du connecteur 55', et les sorties de ces verrous vont activer les dispositifs 59 et 59', tel que l'électroaimant 44 de la touche 4, des cellules piézoélectriques ou autres dispositifs permettant de communiquer directement ou indirectement à l'usager une sensation tactile binaire sur ses doigts. Ces circuits électroniques très simples permettent de réaliser un périphérique de lecture/écriture tels que ceux présentés figures 1 et 2 bon marché et adapté à des personnes mal voyantes.

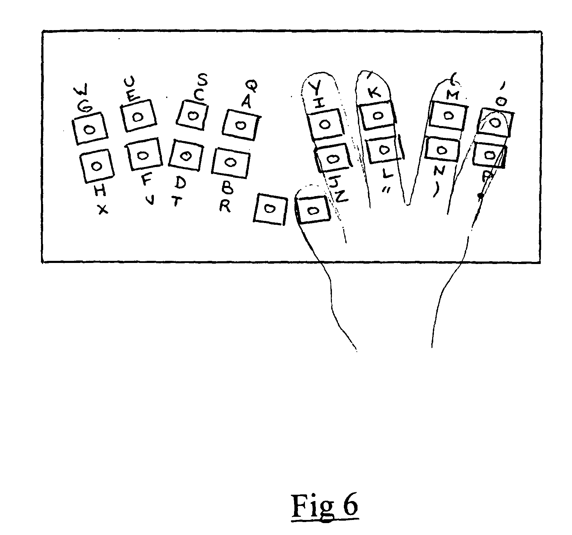

La figure 6 représente un mode de réalisation de l'invention dans lequel plusieurs moyens sensitifs sont associés à chaque doigt. Des moyens de saisie peuvent également être affectés à chaque moyen sensitif. Un moyen sensitif est associé à chaque pouce de l'utilisateur. Deux moyens sensitifs sont affectés à chacun des autres doigts. Chaque moyen sensitif de ces huit doigts, soit seize moyens sensitifs peut correspondre à deux caractères. La présence ou non d'une sensation sur le moyen sensitif correspondant au pouce permet de définir le caractère auquel la sensation correspond. Ce mode de réalisation de l'invention constitue un autre principe de lecture combinatoire.

## Revendications

1. Système de lecture tactile, permettant à un utilisateur de lire ou de saisir des données vers un calculateur électronique, ce système comprenant des moyens sensitifs (13, 13') pour procurer une sensation à l'utilisateur, sous la commande du calculateur, et des moyens de saisie (12, 12') de données vers le calculateur, chaque moyen sensitif (13, 13') étant disposé à proximité ou inséré dans le corps même d'un moyen de saisie (12, 12') de telle sorte que l'usager puisse transmettre une information binaire au calculateur ou la lecture d'une information binaire transmise par ce même calculateur sans changer de position des mains **caractérisé en ce que** ce système est intégrable dans un boîtier (3) même du calculateur électronique, ces moyens sensitifs (13, 13') permettant de procurer à l'utilisateur, sous la commande du calculateur, au moins une sensation binaire sur chacun d'au moins deux doigts dudit utilisateur, chaque combinaison de sensations binaires simultanées pouvant être affectée à une information du type caractère transmise par le calculateur, les moyens sensitifs (13, 13') étant répartis sur chacun d'au moins six doigts de l'utilisateur, chaque moyen sensitif (13, 13') correspondant à l'un des points d'un caractère braille.

2. Système de lecture tactile selon la revendication 1 **caractérisé en ce que** les moyens sensitifs (13, 13') procurent une sensation binaire à chaque doigt par la présence ou non d'un relief sur la surface desdits moyens sensitifs.

3. Système de lecture tactile selon la revendication 1 **caractérisé en ce que** les moyens sensitifs (13, 13') sont constitués par des éléments mobiles, la sensation binaire étant procurée par le blocage ou la liberté de chacun des éléments mobiles.

4. Système de lecture tactile selon la revendication 1 **caractérisé en ce que** les moyens sensitifs (13, 13') procurent une sensation binaire à chaque doigt sous forme vibratoire.

5. Système de lecture tactile selon la revendication 1 **caractérisé en ce que** les moyens sensitifs (13, 13') procurent une sensation binaire à chaque doigt sous forme d'une sensation thermique.

6. Système de lecture tactile selon la revendication 1 **caractérisé en ce que** les moyens sensitifs (13, 13') procurent une sensation binaire à chaque doigt sous forme d'une impulsion électrique légère.

7. Dispositif de communication avec un calculateur comportant au moins un système de lecture tactile selon l'une des revendications 1 à 6 **caractérisé en ce que** chaque moyen sensitif (13, 13') s'insère dans chaque moyen de saisie (210, 323, 324, 40)..

8. Dispositif selon la revendication 7 **caractérisé en ce que** chaque moyen de saisie (40) comprend un mécanisme de touche à enfoncement, et **en ce que** les moyens sensitifs (13, 13') sont constitués par mécanisme capable de bloquer l'enfoncement dudit mécanisme de touche.

9. Dispositif de communication avec un calculateur comportant au moins un système de lecture tactile selon l'une des revendications 1 à 6 **caractérisé en ce que** chaque moyen sensitif (13, 13') est disposé à proximité de chaque moyen de saisie (12, 12').

10. Dispositif selon l'une des revendications 7 à 9 **caractérisé en ce que** les moyens sensitifs (13, 13') et les moyens de saisie (12, 12') sont situés sur la face (31) d'un boîtier opposée à celle destinée à être en regard de l'usager.

11. Système de lecture tactile selon la revendication 1 **caractérisé en ce que** plusieurs moyens sensitifs peuvent être répartis sur chaque doigt ou agir également sur la paume de l'utilisateur.

## Patentansprüche

1. Taktiles Lesesystem, das es dem Benutzer ermöglicht, Daten eines elektronischen Rechners zu lesen oder einzugeben, ausgestattet mit unter den Bedientasten angebrachten sensitiven Mitteln (13, 13'), um dem Benutzer eine Rückmeldung zu geben, und mit Eingabetasten (12, 12') für die Dateneingabe, wobei jedes sensitive Mittel (13, 13') in der Nähe einer Eingabetaste (12, 12') liegt oder direkt darin eingebettet ist, so dass der Benutzer eine binäre Information an den Rechner weiterleiten oder eine von diesem Rechner kommende binäre Information lesen kann, ohne die Stellung seiner Hände zu verändern. Dieses System ist **dadurch gekennzeichnet, dass** es direkt ins Gehäuse (3) des Rechners integriert werden kann und dass die sensitiven Mittel (13, 13') dem Benutzer unter den Bedientasten des Rechners an jedem von mindestens zwei Fingern eine binäre Sensation liefern, wobei jede Kombination von simultan gelieferten binären Sensationen einer vom Rechner übermittelten Information vom Typ Buchstabe zugeordnet werden kann. Die sensitiven Mittel (13, 13') sind hierbei auf mindestens sechs Finger des Benutzers verteilt, wobei jedes sensitive Mittel (13, 13') einem Punkt der Braille-Schrift entspricht.

2. Taktiles Lesesystem gemäß Patentanspruch 1, **dadurch gekennzeichnet, dass** die sensitiven Mittel (13, 13') an jeden Finger eine binäre Sensation weiterleiten, indem auf der Oberfläche jedes dieser sensitiven Mittel ein Relief fühlbar oder nicht fühlbar ist.

3. Taktiles Lesesystem gemäß Patentanspruch 1, **dadurch gekennzeichnet, dass** die sensitiven Mittel (13, 13') aus beweglichen Elementen bestehen, wobei die binäre Sensation dadurch entsteht, dass jedes dieser Elemente entweder blockiert wird oder beweglich bleibt.

4. Taktiles Lesesystem gemäß Patentanspruch 1, **dadurch gekennzeichnet, dass** die sensitiven Mittel (13, 13') an jeden Finger eine binäre Sensation in Form einer Vibration weiterleiten.

5. Taktiles Lesesystem gemäß Patentanspruch 1, **dadurch gekennzeichnet, dass** die sensitiven Mittel (13, 13') an jeden Finger eine binäre Sensation in Form eines Wärmeimpulses weiterleiten.

6. Taktiles Lesesystem gemäß Patentanspruch 1, **dadurch gekennzeichnet, dass** die sensitiven Mittel (13, 13') an jeden Finger eine binäre Sensation in Form eines leichten elektrischen Impulses weiterleiten.

7. Vorrichtung zur Kommunikation mit einem Rechner, versehen mit mindestens einem taktilen Lesesystem gemäß einer der Patentansprüche 1 bis 6, **dadurch gekennzeichnet, dass** die sensitiven Mittel (13, 13') in jede der Eingabetasten (210, 323, 324, 40 ...) integriert sind.

8. Vorrichtung gemäß Patentanspruch 7, **dadurch gekennzeichnet, dass** jede Eingabetaste (40) mit einem Mechanismus zum Eindrücken versehen ist und dass die sensitiven Mittel (13, 13') aus einem Mechanismus bestehen, der das Eindrücken der Taste verhindern kann.

9. Vorrichtung zur Kommunikation mit einem Rechner, versehen mit mindestens einem taktilen Lesesystem gemäß einer der Patentansprüche 1 bis 6, **dadurch gekennzeichnet, dass** jedes der sensitiven Mittel (13, 13') in der Nähe jeder der Eingabetasten (12, 12') liegt.

10. Vorrichtung gemäß einem der Patentansprüche 7 bis 9, **dadurch gekennzeichnet, dass** die sensitiven Mittel (13, 13') und die Eingabetasten (12, 12') sich auf der Seite (31) eines Gehäuses befinden, die der vor dem Benutzer befindlichen Seite gegenüberliegt.

11. Taktiles Lesesystem gemäß Patentanspruch 1, **dadurch gekennzeichnet, dass** mehrere sensitive Mittel auf jeden Finger des Benutzers oder ebenfalls auf seine Handfläche verteilt sein können.

## Claims

1. Tactile reading system allowing a user to read or enter data into an electronic calculator, such system consisting of sensitive devices (13, 13') in order to generate a sensation to the user, beneath the calculator command, and data entry devices (12, 12') into a calculator, each sensitive device (13, 13') being laid out nearby or inserted right into the body of a data entry device (12, 12') so that the user be in a position to send a binary data to calculator or read a binary data sent by such calculator without changing hands' position, featured by the fact that such system can be incorporated to the electronic calculator's casing (3), such sensitive devices (13, 13') enabling to provide the user, beneath calculator's command, with at least a binary sensation on, at least, each of the two fingers of said user, each combination of simultaneous binary sensations being likely to be allocated to a character type data transmitted by calculator, sensitive devices (13, 13') being distributed on each of at least six user's fingers, each sensitive device (13, 13') corresponding to one of the Braille character points.

2. Tactile reading system according to claim 1, featured in that sensitive devices (13, 13') provide a binary sensation to each finger by the presence or absence of a raised form over the surface of said sensitive devices.

3. Tactile reading system according to claim 1, featured in that sensitive devices (13, 13') are composed of moving elements, the binary sensation being provided by blocking or releasing each moving element.

4. Tactile reading system according to claim 1, featured in that sensitive devices (13, 13') provide a vibratory-form binary sensation to each finger.

5. Tactile reading system according to claim 1, featured in that sensitive devices (13, 13') provide a binary sensation to each finger coming up in the form of a thermal sensation.

6. Tactile reading system according to claim 1, featured in that sensitive devices (13, 13') provide a binary sensation to each finger coming up in the form of a slight electrical impulse.

7. Contrivance allowing to communicate with a calculator consisting at least of a tactile reading system according to one of the claims 1 through 6 featured in that every sensitive device (13, 13') is inserted in each data entry device (210, 323, 324, 40).

8. Contrivance according to claim 7 featured in that each data entry device (40) consists of a pressing-motion key mechanism, and in that sensitive devices (13, 13') are composed of a mechanism likely to lock the pressing motion of said key mechanism.

9. Contrivance allowing to communicate with a calculator consisting at least of a tactile reading system according to one of the claims 1 through 6 featured in that every sensitive device (13, 13') is laid out close to each data entry device (12, 12').

10. Contrivance according to one of claims 7 through 9 featured in that sensitive devices (13, 13') and data entry devices (12, 12') are located on front section (31) of a casing being in opposed configuration with respect to that intended to be facing the user.

11. Tactile reading system according to claim 1, featured in that various sensitive devices can be distributed over each finger or also act on user's palm.
